# EUROPEAN PATENT APPLICATION

(11) **EP 4 745 099 A1**
(43) Date of publication of application: **20.05.2026**
(21) Application number: 25214585.9
(22) Date of filing: 10.11.2025
(51) Int. Cl.: C03B 33/06, C03B 33/085, H01J 49/16, C03B 23/047, C03B 23/043, C03B 23/11

(54) **IMPROVED EMITTER TIPS AND METHODS FOR MANUFACTURE**

(30) Priority: 08.11.2024 US 202463718112 P
(71) Applicant: THERMO FINNIGAN LLC, San Jose CA 95134 (US)
(72) Inventor: SCHULTZ, Gary, Ithaca (US)
(74) Representative: Boult Wade Tennant LLP

(57) **Abstract**

The application teaches a method for forming shaped capillary emitters. The method comprises directing a laser to a capillary through a beam restrictor device. The method comprises rastering the laser along a direction parallel to a flow direction in the capillary to heat the capillary. The method comprises applying tensile force at a first end and a second end of the capillary to cause the capillary to break and form two shaped capillary emitter tips.

## Description

### BACKGROUND

Emitter tips for electrospray ionization during liquid chromatography-mass spectrometry (LC-MS) of samples can have a variety of shapes, sizes, and geometries that influence the quality of the data obtained. Improved emitter tips can increase data quality for low-flow chromatography methods.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.
FIG. 1 illustrates a system for forming shaped capillary emitters in accordance with various embodiments taught herein.
FIG. 2 shows an optical microscope image of a left and right emitter tip pair created during a capillary heating and pulling operation executed in accordance with systems and methods taught herein.
FIG. 3 shows an image of a left and right emitter tip pair created by a conventional capillary heating and pulling operation but without the beam restrictor device taught herein.
FIG. 4 shows an optical microscope image of a left and right emitter tip pair from a capillary that was pulled in a conventional capillary puller that lacks the beam restrictor device of devices taught herein.
FIG. 5A shows an optical microscope images of a left emitter tip created during a capillary heating and pulling operation executed in accordance with systems and methods taught herein.
FIG. 5B shows an optical microscope images of a right emitter tip (the pair complement to the tip in FIG. 5A) created during a capillary heating and pulling operation executed in accordance with systems and methods taught herein.
FIG. 6 illustrates a method for forming shaped capillary emitters in accordance with one embodiment.

### DETAILED DESCRIPTION

Methods and systems taught herein enable creation of emitter tips having favorable dimensions and characteristics for low flow rate electrospray techniques such as nanospray or microspray. By employing a laser beam that has been restricted by a beam restrictor device that limits one or both of the beam size or raster distance, the systems and methods taught herein can more gently and stably heat and pull capillaries of very small diameter, i.e., less than 150 micron outer diameter, to form emitter tips with low dead volume, desirable backpressure, and dimensions (e.g., tapers, diameters) that produce stable flow in the nano- and microflow regimes. The beam restrictor device slows down the heating rate of the capillary and provides better temporal heating control. By slowing down the capillary heating rate, time is allowed for the input heat to uniformly distribute in the capillary. The even heat distribution results in improved emitter tip shape formation and tip outer and inner dimensions suitable for direct use as electrospray emitters (particularly in the nano and microflow regimes) without further post-processing steps. The beam restrictor device provides better control of the energy input to the capillary compared with the conventional puller system that does not have a beam restrictor device resulting in improved experimental control of the pull parameters and resultant micropipette tip shape and dimensions.

For low flow applications, emitter tips formed from capillaries (e.g., glass capillary tubes) with an outer diameter (OD) of around 150 micrometers or less is advantageous to avoid post-column fluidic dispersion that can occur due to dead volume at a post-column liquid junction (where high voltage is often applied) that arises in larger diameter capillaries. While conventional methods of heating and pulling capillaries to form emitter tips have been successful with large outer diameter capillaries (e.g., capillaries with outer diameters of around 350 microns or more), attempts to extend such conventional methods to produce emitter tips from sub-150 µm OD capillaries have been unsuccessful as many of the resulting tips fail to meet specifications (e.g., improper taper, tip OD, tip inner diameter, excessive backpressure, etc.). Additionally, conventional methods produce emitter tips asymmetrically such that at least one of the two emitter tips produced by the conventional method is unusable.

The systems and methods taught herein also improve upon conventional processes by producing suitable electrospray emitter tips through heating and pulling without the need for further post-processing steps. In conventional processes, heating and pulling glass tubing with dimensions smaller than 350 µm OD results in an intermediate product that is not directly useful as an electrospray ionization emitter without additional post-processing steps because the inner diameter of the tube pinches and closes off. Additional steps are then required to mechanically or chemically re-open the flow path such as physically breaking the tips open to enable liquid flow at reasonable pressures, etching the tip end open using hydrofluoric (HF) acid, or polishing the ends to open the inner channel using a micro-sized diamond embedded film. The methods taught herein avoid the production of intermediate products by producing emitter tips that remain open and can allow liquid to flow therethrough under application of reasonable backpressure.

Pulled capillary emitters with inner diameters that are larger away from the tip and then taper to a smaller inner diameter at the final electrospray tip provide improved ionization efficiencies when compared to electrospray emitters produced by mechanical polishing/tapering of a capillary having a fixed inner diameter. Systems and methods taught herein can form a pulled electrospray ionization (ESI) emitter having a 10-40 micron inner diameter (ID) capillary tube (e.g., 10, 15, 20, 30, 40 micron ID) that tapers to an emitter tip pulled to final dimensions of between 2-5 microns ID and 5-10 microns OD. These tips provide higher spray currents and result in improved ionization efficiency of the sample compared with existing ESI emitters. Emitters produced using the systems and methods taught herein can be integrated into interchangeable cartridges that fluidically couple to a chromatography system to further enhance ionization efficiency to provide improved analyte identification from complex mixtures. The higher spray current combined with a slightly smaller tip OD has been shown experimentally to provide an approximate 10% increase in peptide ID when tested with a HeLa digest sample in comparison to conventional emitters.

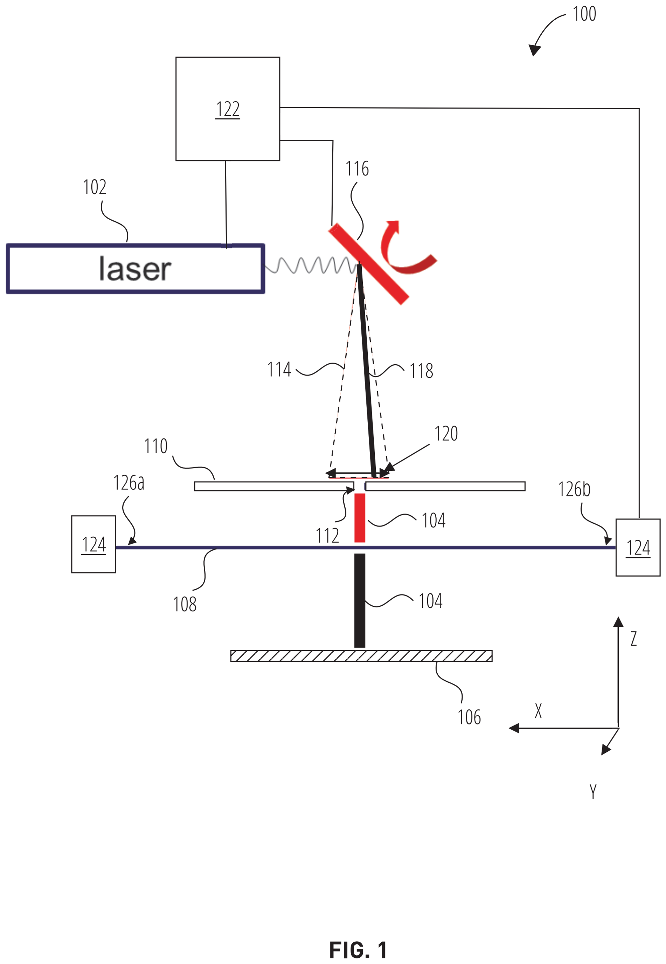

FIG. 1 illustrates a system 100 for forming shaped capillary emitters in accordance with various embodiments taught herein. The system 100 includes an electromagnetic radiation source such as a laser 102, a raster element 116, a beam restrictor device 110, a controller 122, a puller system 124 and a reflector 106. The laser 102 directs a laser beam onto the raster element 116, which produces an initial beam 118 directed towards a capillary 108. The raster element 116 rasters the initial beam 118 along one or more dimensions (e.g., along the X-axis or the Y-axis, individually or in combination) within a cone 114. As the initial beam 118 is rastered over the beam restrictor device 110, some portion of the laser beam passes through the beam restrictor device 110 (such as through slit 112) to form a heating beam 104. The heating beam 104 passes through and irradiates the capillary 108 to cause the capillary material to heat and soften. Portions of the heating beam 104 that pass through the capillary 108 are retroreflected by the reflector 106 and are directed back towards the capillary 108. As the capillary 108 is heated and softened by the heating beam 104, the puller system 124 applies tensile force at a first end 126a and a second end 126b of the capillary 108. The capillary 108 begins to expand in length as the first end 126a and second end 126b are drawn apart. At the same time, the dimensions of the capillary 108 in the vicinity of the heating beam 104 are reduced by the draw. Eventually, a break forms in the capillary 108 thus creating two separate capillary emitters. A first capillary emitter of the pair extends from the first end 126a to a shaped emitter tip formed by the process while a second capillary emitter of the pair extends from the second end 126b to a shaped emitter tip. The shaped capillary emitter tips and associated lengths of capillary exhibit favorable properties for electrospray ionization such as low dead volume, desirable backpressure, and dimensions (e.g., tapers, diameters) that produce stable flow in the nano- and microflow regimes. In various examples, final capillary emitter tip shapes produced by the systems and methods taught herein can include inner diameter at the tip in a range from 2-5 microns or 2-10 microns, inner diameter of the capillary away from the tip in a range of 10-40 microns, outer diameter at the tip in the range of 5-12 microns, outer diameter away from the tip in a range from 50-100 microns or in a range from 50-300 microns, tip apex angle in a range from 10-30°, in a range of 15-20°, or about 15°, and tip taper lengths in a range from 200-500 microns or about 400 microns.

The beam restrictor device 110 reduces the amount of laser energy that reaches the capillary 108 by allowing light to impinge the capillary over less than a full raster distance 120 of the initial beam 118 along the length of the capillary 108, limiting a size of the initial beam 118, or both. In exemplary embodiments, the initial beam 118 is rastered along a direction parallel to a fluid flow direction (e.g., along a central axis connecting the first end 126a to the second end 126b) in the capillary. That is, the laser 102 is directed along the axial length of a capillary that is mounted in a set of puller bars that places the capillary 108 in the path of the laser beam. The raster element 116 can include a scanning or stepper mirror or an acousto-optical modulator in various embodiments. The beam restrictor device 110 includes a feature with a characteristic dimension (e.g., aperture width, slit width, duty cycle) that restricts passage of the initial beam 118 to only select positions with the cone 114 along the raster distance 120. For example, the beam restrictor device 110 can include a slit 112 or aperture having a width that is less than the raster distance 120. A width of the slit is aligned parallel to the flow direction and raster direction of the beam. The beam restrictor device 110 enables better control of capillary heating rates and the length of the heating zone on the capillary 108, which is proportional to the raster distance 120. In some examples, the characteristic dimension is a slit width in a range from 0.1 mm to 1.0 mm, about 0.25 mm, or about 0.5 mm. As such, the characteristic dimension can be similar to the beam spot size in some examples where the beam spot size is in the range of 0.1 to 0.3 mm, and the beam restrictor device 110 can limit the size of the beam in those examples. In some examples, the characteristic dimension is a slit width in a range from about 1.5 times to 2.5 times the outer diameter of the capillary 108 or is about two times the outer diameter of the capillary 108. In some examples, the characteristic dimension is a slit width in a range from about 10% to about 20% of the raster distance 120.

While the beam restrictor device 110 has been described as a slit or aperture in this example, other forms of beam restrictor device are compatible with the systems and methods taught herein. In some examples, the beam restrictor device 110 is an optical chopper that operates to cyclically block and unblock the initial beam 118 according to a duty cycle. In other examples, the beam restrictor device 110 is a knife-edge or other one-sided aperture or block. In further examples, the beam restrictor device 110 can be a component internal to the laser 102 that is controlled by a controller 122.

In some examples, the beam restrictor device 110 can have a characteristic dimension that varies during a pulling and heating operation. For example, the width of the slit can be changed as the laser beam is rastered under control of the controller 122. In other examples, the beam restrictor device 110 can include an iris or shutter, or the controller 122 can vary a speed of the chopper or other cyclical blocking beam restrictor device 110. Changing the size of the characteristic dimension during a pulling and heating operation can advantageously enable the characteristic dimension to match the reducing diameter of the capillary as it is continually drawn to smaller dimensions during the heating and pulling operation. In some examples, the controller 122 can vary the characteristic dimension (e.g., slit width) to maintain a fixed ratio between the characteristic dimension and the capillary outer diameter throughout the pulling and heating operation. As described above, the ratio can be in the range of a characteristic dimension that is 1.5 times to 2.5 times the outer diameter of the capillary in some examples.

In some examples, the beam restrictor device 110 can cause the laser to heat the capillary with a duty cycle less than 100%. For example, the controller 122 can cause the laser to sweep over a raster distance 120 of 1.5 mm while the slit 112 of the beam restrictor device 110 can be 0.25 mm. In this arrangement, light only penetrates and reaches the capillary 108 when passing over the 0.25 mm width of the slit and is blocked during the remaining portion of the raster distance 120. This causes an intermittent heating effect as the capillary is only illuminated by the beam for 0.25/1.5≈ 17% of each cycle or pass of the beam. In some examples, the illumination duty cycle resulting from rastering the beam in the presence of the beam restrictor device can be in a range from 10% to 20%. This value also represents the reduction in heat dose delivered to the capillary versus a similar setup without the beam restrictor device. Reduction of the duty cycle can be advantageous as it allows for heat to spread more evenly through the capillary and avoid overheating the capillary while still applying high impulse power to enable the capillary material to reach a softened or melted condition. The beam restrictor device thus provides for a slower heating rate of the capillary through scanning of the raster element 116 to effectively lower the time-integrated laser output power and capillary heating rate. This provides additional time for the capillary temperature to increase and for heat to spread more uniformly in the capillary before it begins to melt and stretch due to the puller bar force on each end of a mounted capillary (described in greater detail below).

The reflector 106 helps ensure that the capillary 108 is evenly heated by the heating beam 104 as the beam illuminates both a top side and a bottom side of the capillary 108. In various examples, the reflector 106 can be a flat or curved mirror. In some examples, the laser 102 is a high-power, continuous wave laser such as a carbon dioxide (CO₂) laser or Nd-YAG laser. Thus, the laser is not pulsed and/or is not capable of being pulsed in some examples.

The puller system 124 attaches to the first end 126a and the second end 126b to apply tensile force and pull each end away from the other during a heating and pulling operation. For example, the puller system 124 can include clamps or bars that attach securely to the capillary 108 without slipping for efficient transfer of force to the capillary 108. In some examples, the puller system 124 includes force, acceleration, and/or velocity sensors that detect motion of the first end 126a or the second end 126b. Output from the sensors can be sent to the controller 122 to provide closed-loop feedback to the pulling operation.

In some examples, systems and methods taught herein can include a step of removing an outer coating on the capillary before commencement of the heating and pulling operation. For example, some capillaries can be provided with an outer coating such as polyimide. The outer coating can have a thickness in a range from 5-15 microns and therefore increase the capillary outer diameter by 10-30 microns. The removal process can include heating, burning, or chemical stripping of a portion of the length of the capillary near where the laser is to impinge the capillary.

The controller 122 is communicatively coupled to the laser 102, raster element 116, and puller system 124 and can control the operation of these components independently and in concert to execute steps of the methods taught herein. In some examples, the controller can control an output power of the laser 102. The controller 122 can control the raster element 116 to direct the initial beam 118 along a pre-programmed or desired raster pattern within the cone 114. The controller 122 can receive feedback signals (e.g., sensor signals) from the puller system 124 to monitor the progress of a particular pulling operation. Based upon the received signals, the controller 122 can set a force value for a final pull effort (i.e., to break the capillary into two shaped emitters having tips) and a timing for the final pull effort in relation to the heating of the capillary. For example, the controller 122 can receive signals related to the force, velocity, or acceleration of an end of the capillary that are compared to threshold values to indicate proximity to the end of the pull procedure. Upon reaching the threshold value, the controller 122 can control the puller system 124 to execute the final pull immediately or after a settable delay time (e.g., to allow the capillary to cool slightly after discontinuing heating but before executing the final pull).

In some examples, the controller 122 can control the raster element 116 to scan the initial beam 118 over a raster distance 120 in a range from 1.0 to 10 mm such as 1 mm, 1.5 mm, 1.9 mm, 4.5 mm, 6.5 mm, or 8 mm. Due to hardware control limitations such as a lack of fine dithering control of the raster element 116, it may be technically difficult to reduce the raster distance 120 below about 1.0 mm while maintaining desirable beam shape and other beam properties. As such, the beam restrictor device 110 can act to limit the effective heating zone of the capillary 108 to a value below the minimum available raster distance 120 according to some hardware setups.

Parameters available to the controller 122 to control the pulling program include laser power, the raster distance along the capillary axis, the capillary melt rate (through feedback from position, velocity, or acceleration sensors at the clamps holding the capillary), the capillary cooling time relative to when the laser power is removed from the capillary, and pulling force applied to capillary to separate the capillary into two emitters. The controller 122 can receive parameters from a user by manual entry of parameter values on an LCD display or other input device or can be loaded from a data storage such as a memory (e.g., in the form of a program). A program can be a single line with each defined parameter or a multi-line program where each line can contain different program parameters.

In some examples, the controller 122 can control the power of the laser 102 in a range from 0% to 100% of a maximum laser output value such as 10 W. In some examples, the controller 122 can receive a velocity parameter that is compared to a position, speed of separation, or acceleration of separation of the ends of the capillary as the material softens under the pulling load. The controller 122 can determine when a measured parameter (e.g., as measured by a sensor) exceeds the set velocity parameter at which time the controller 122 can execute a hard pull to cause separation of the two ends of the capillary to form the emitter tips. In some examples, the controller 122 can receive a pull force parameter that determines the force magnitude applied during the hard pull. In some examples, the controller 122 can receive a delay parameter that controls the time between turning off of the laser 102 and execution of the hard pull to separate the capillary ends. Different delay parameters can enable formation of different tip shapes by varying the amount of cooling of the capillary material between the end of heating and execution of the pull maneuver. In some examples, the controller 122 can loop a heating cycle a number of times until the conditions are achieved to trigger the hard pull.

By controlled heating and pulling of the capillary, the systems and methods taught herein produce capillary emitters having high electrical conductivity (due to the large OD throughout much of the length of the capillary) while simultaneously enabling a small OD of the emitter tip. High electrical conductivity advantageously enables adequate charge transfer to an upstream conductive fluidic union (e.g., prevents charge accumulation which can add noise to electrical measurements). The small OD at the emitter tip advantageously provides good flow control and stability in low-flow regimes at the tip where the Taylor cone is formed from jetted material. Conventional methods involving physically polishing the end of a capillary to a fine point to form a tip do not achieve this transition from such large OD of the tube to small OD at the tip because the machining/polishing process starts with a small OD tube and can only remove material resulting in an emitter with no transitions in ID size. Because these two factors (charge transfer and flow stability/jet geometry) are important to cone jet formation and sensitivity, the emitter tips produced by the systems and methods taught herein enable marked improvements during execution of low-flow electrospray techniques.

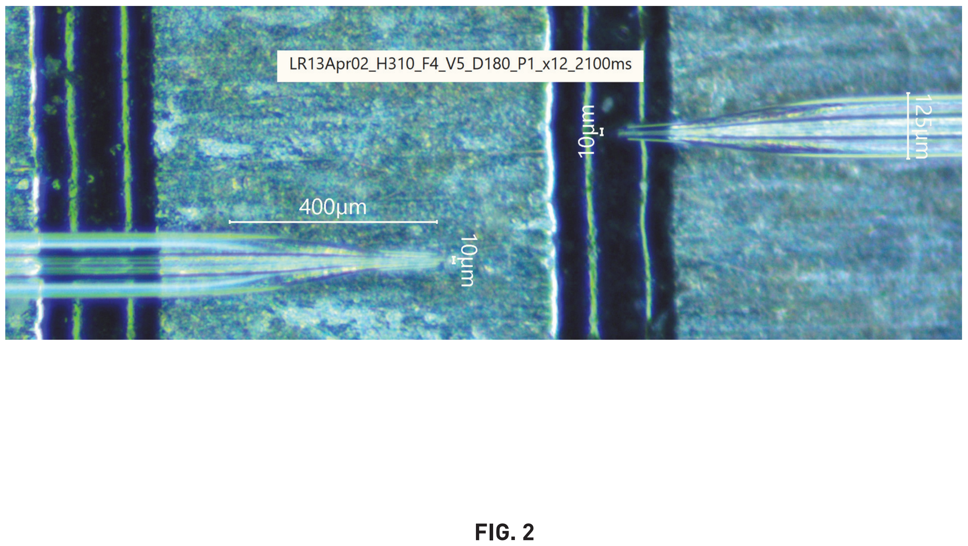

FIG. 2 shows an optical microscope image of a left and right emitter tip pair created during a capillary heating and pulling operation executed in accordance with systems and methods taught herein. A horizontal scale bar of 400 µm and a vertical scale bar of 10 µm are overlaid on the image. The capillary has an outer diameter of 125 µm and an inner diameter of 40 µm. The beam restrictor device had a slit 112 width of 1.0 mm. The controller set other parameters as follows: raster distance of 6.5 mm, laser power of 31%, velocity threshold of 5, delay before hard pull 180 ms, and pull force of 1. The program was executed by looping twelve times resulting in 2.1 seconds of Heat ON time before the capillary separated to form two emitter tips. The emitter tips had a measured outer diameter of 10 µm and a measured inner diameter of 4-5 µm. The taper length of each tip was 0.4 mm. The back pressure of the emitter tips was measured by connecting to a chromatography system and flowing a water: acetonitrile solution through the tip at a flow rate of 1µl/min. The back pressure was measured at about 1 bar.

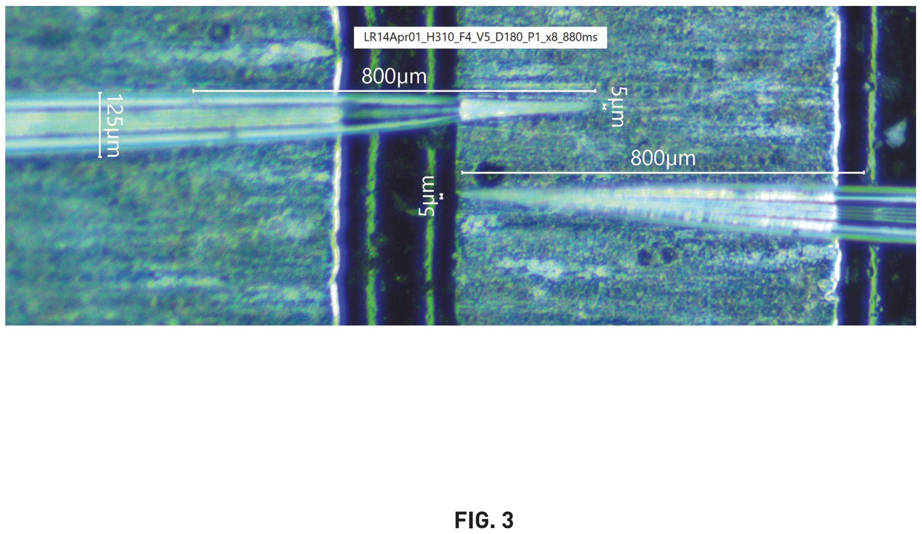

FIG. 3 shows an image of a left and right emitter tip pair created by a conventional capillary heating and pulling operation but without the beam restrictor device taught herein. The same controller parameters were used as described above with respect to FIG. 2 except that the laser beam passed unimpeded from the raster element to the capillary. In this case, the program looped eight times and the heating and pulling operation lasted for only 0.88 seconds of Heat ON time before the capillary separated. The shorter operation time arises because the capillary is continuously heated during the experiment and thus reaches melting temperature more abruptly. The resulting tip dimensions and experimentally determined backpressures were significantly different and much less suitable for use as emitter tips. For example, the resulting tips had an outer diameter of 5 µm, inner diameter of 1.3 µm, a taper length of 0.8mm, and a back pressure greater than 200 bar. Such a large backpressure is unsuitable for use as an emitter because applying such high pressures will cause upstream elements (such as chromatography columns) to be subjected to pressure loads that they are unlikely to withstand. Thus, while it is possible to pull a glass capillary with starting outer diameter of 125 µm to form a tip with an outer diameter less than 10 µm using conventional methods, the inner diameter dimensions are nearly always less than 2 µm and production is inconsistent. Inner-tip dimensions of less than 2 µm are not desirable because these tips will be very susceptible to clogging and lead to high backpressure.

Thus, the improved parameters seen in the emitter tips of FIG. 2 (produced according to the methods taught herein) are a result of the presence of the beam restrictor device that lengthens the operation time and uniformity of applied heat, thus giving greater control over the ratio of outer diameter to inner diameter at the tip. Systems and methods taught herein can routinely achieve final tip dimensions in the range of 5-10 microns OD and 2-5 microns ID while simultaneously producing two symmetric tips upon capillary separation, thus provides two usable ESI emitters for each pull operation.

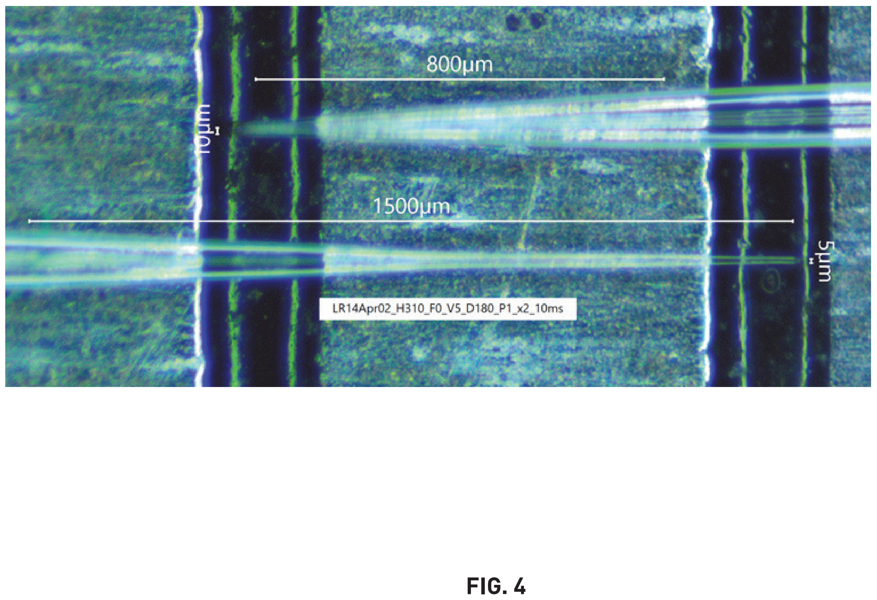

The inventor has also discovered that reducing the raster scan distance of the laser beam in a conventional pulling operation or device to attempt to reduce the volume of the capillary that is heated does not result in successful production of emitter tips. FIG. 4 shows an optical microscope image of a left and right emitter tip pair from a capillary that was pulled in a conventional capillary puller that lacks the beam restrictor device of devices taught herein. The raster distance in this case was set to 1.0 mm (i.e., a raster distance that equals the width of the slit employed in producing the tips of FIG. 2). The capillary had an outer diameter of 125 µm and an inner diameter of 40 µm. The resulting emitter tips (formed from the left and right side of the capillary at the break point) are asymmetric with the left tip having a tip OD close to 10µm and a taper length of 0.8 mm and the right tip having a tip OD close to 5µm and a taper length of 1.5mm. These emitters were not flow tested due to the asymmetric tip results. This test indicates reducing the effective length of the capillary that is impinged by the laser and heated alone while maintaining a high heating rate does not result in effective production of usable emitter tips. On the other hand, reducing both the effective length of the capillary impinged by the laser and the heating rate can result slow heating and pull times (e.g., 10 seconds or greater per program loop) that create greater variability in light source operation impacting quality of the final product and run-to-run reproducibility.

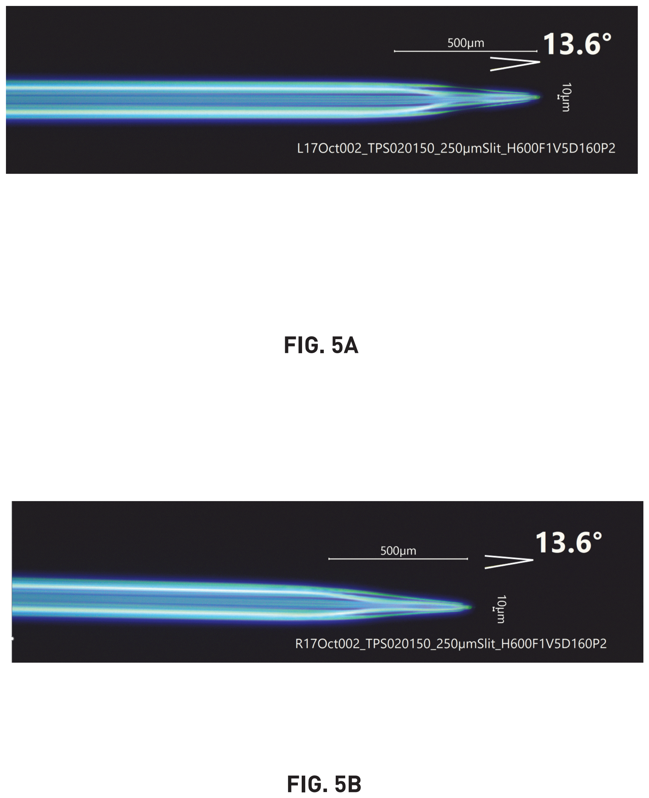

FIG. 5A and FIG. 5B show additional optical microscope images of left and right emitter tips, respectively, created during a capillary heating and pulling operation executed in accordance with systems and methods taught herein. A horizontal scale bar of 500 µm and a vertical scale bar of 10 µm are overlaid on the image. The capillary has an outer diameter of 150 µm and an inner diameter of 20 µm. The beam restrictor device had a slit width of 0.25 mm. The controller set other parameters as follows: raster distance of 1.5 mm, laser power of 60%, velocity threshold of 5, delay before hard pull of 160 ms, and pull force of 2. The resulting emitter tips have an inner diameter of 10 µm and produce a tip apex angle of about 13.6°. The left and right emitter tips are highly symmetric having similar taper lengths, tip apex angles, and inner diameters, and both emitter tips exhibit high radial symmetry (i.e., the taper is radially symmetric).

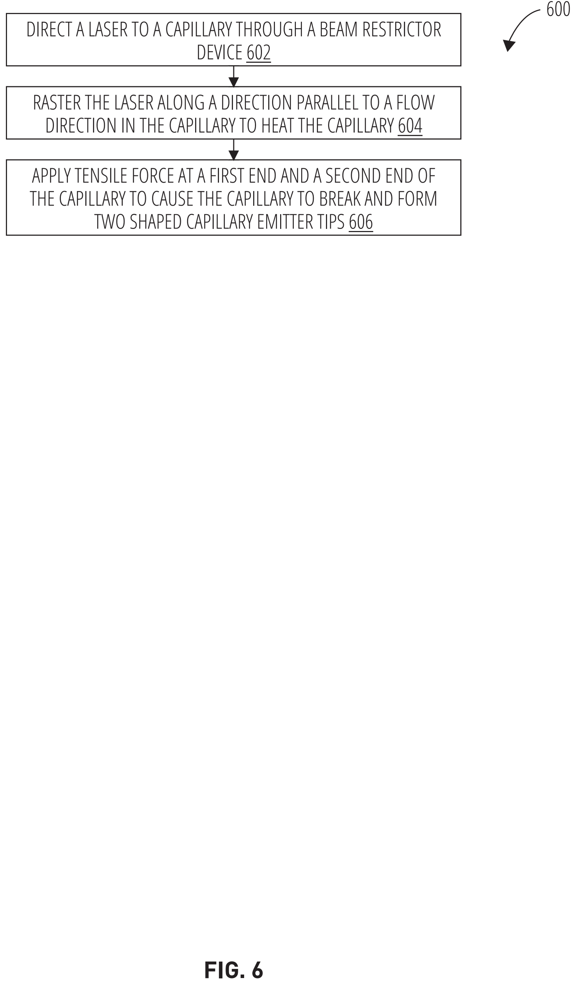

FIG. 6 illustrates a method 600 of forming shaped capillary emitter tips in accordance with examples taught herein. In block 602, method 600 directs a laser to a capillary through a beam restrictor device. In block 604, method 600 rasters the laser along a direction parallel to a flow direction in the capillary to heat the capillary. In block 606, method 600 applies tensile force at a first end and a second end of the capillary to cause the capillary to break and form two shaped capillary emitter tips.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

The embodiments described herein can be practiced with other computer system configurations including hand-held devices, microprocessor systems, microprocessor-based or programmable consumer electronics, minicomputers, mainframe computers and the like. The embodiments can also be practiced in distributing computing environments where tasks are performed by remote processing devices that are linked through a network.

It should also be understood that the embodiments described herein can employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms such as producing, identifying, determining, or comparing.

Certain embodiments can also be embodied as computer readable code on a computer readable medium. The computer readable medium is any data storage device that can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network of coupled computer systems so that the computer readable code is stored and executed in a distributed fashion.

The section headings used herein are for organizational purposes only and are not to be construed as limiting the described subject matter in any way.

In this detailed description of the various embodiments, for purposes of explanation, numerous specific details have been set forth to provide a thorough understanding of the embodiments disclosed. One skilled in the art will appreciate, however, that these various embodiments can be practiced with or without these specific details in some examples. In other instances, structures and devices are shown in block diagram form. Furthermore, one skilled in the art can readily appreciate that the specific sequences in which methods are presented and performed are illustrative and it is contemplated that the sequences can be varied (unless explicitly noted otherwise) and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to specific temperatures, concentrations, times, pressures, flow rates, cross-sectional areas, etc. discussed in the present teachings, such that slight and insubstantial deviations are within the scope of the present teachings. More specifically, the use of "about" or "substantially similar" in reference to a quantity or dimension indicates that the numerical value is within 10% of the stated quantity. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also can refer to "at least one" or "one or more" in some instances unless expressly noted to the contrary. Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" as used herein sets forth a set of components, real or abstract, comprising a whole where each component interacts with or is related to at least one other component within the whole.

Advantages and features of the present disclosure can be further described by the following examples:
Example 1. A method for forming shaped capillary emitters, the method comprising: directing a laser to a capillary through a beam restrictor device; rastering the laser along a direction parallel to a flow direction in the capillary to heat the capillary; and applying tensile force at a first end and a second end of the capillary to cause the capillary to break and form two shaped capillary emitter tips.
Example 2. The method of example 1, wherein the beam limiter device is a slit or aperture.
Example 3. The method of example 2, wherein a width of the slit is aligned with the flow direction.
Example 4. The method of example 2, wherein a width of the slit is about two times an outer diameter of the capillary.
Example 5. The method of example 2, wherein a width of the slit is about 0.25 millimeters.
Example 6. The method of any one of examples 1 to 4, wherein the beam limiter device is a knife-edge or a chopper.
Example 7. The method of any one of examples 1 to 6, wherein rastering the laser beam includes controlling a direction of the beam using a scanning mirror or acousto-optical modulator.
Example 8. The method of any one of examples 1 to 7, further comprising controlling one or more of a laser power, a raster distance, a magnitude of the tensile force, or a time delay between rastering the laser beam and applying the tensile force.
Example 9. The method of any one of examples 1 to 8, further comprising using the beam restrictor device to intermittently allow illumination of the capillary by the laser beam to reduce a time-averaged laser power delivered to the capillary.
Example 10. The method of any one of examples 1 to 9, further comprising: measuring a velocity of the first end relative to the second end; and upon measuring that the velocity meets or exceeds a threshold value, increasing the magnitude of the tensile force to cause the break.
Example 11. The method of any one of examples 1 to 10, wherein an outer diameter of a shaped capillary emitter tip is in a range from 5 to 12 micrometers and an outer diameter of the capillary away from the shaped capillary emitter tip is in a range from 50 to 100 micrometers.
Example 12. The method of any one of examples 1 to 11, wherein an inner diameter of the shaped capillary emitter tip is in a range from 2 to 5 micrometers and an inner diameter of the capillary away from the shaped capillary emitter tip is in a range from 10 to 40 micrometers.
Example 13. The method of any one of examples 1 to 12, wherein applying the tensile force causes the two formed shaped capillary emitter tips to be substantially symmetrical.
Example 14. The method of any one of examples 1 to 13, further comprising setting a beam size of the laser beam to be about two times greater than an outer diameter of the capillary.
Example 15. The method of any one of examples 1 to 14, further comprising varying a size of a characteristic dimension of the beam restrictor device during rastering of the laser.
Example 16. The method of example 15, wherein varying the size of the characteristic dimension maintains a ratio of the characteristic dimension and an outer diameter of the capillary as the diameter reduces due to heating and pulling.
Example 17. The method of example 16, wherein the ratio is in a range from 1.5 to 2.5.

## Claims

1. A method for forming shaped capillary emitters, the method comprising:
directing a laser to a capillary through a beam restrictor device;
rastering the laser along a direction parallel to a flow direction in the capillary to heat the capillary; and
applying tensile force at a first end and a second end of the capillary to cause the capillary to break and form two shaped capillary emitter tips.

2. The method of claim 1, wherein the beam limiter device is a slit or aperture.

3. The method of claim 2, wherein:
a width of the slit is aligned with the flow direction,
a width of the slit is about two times an outer diameter of the capillary, or
a width of the slit is about 0.25 millimeters.

4. The method of any one of claims 1 to 3, wherein the beam limiter device is a knife-edge or a chopper.

5. The method of any one of claims 1 to 4, wherein rastering the laser beam includes controlling a direction of the beam using a scanning mirror or acousto-optical modulator.

6. The method of any one of claims 1 to 5, further comprising controlling one or more of a laser power, a raster distance, a magnitude of the tensile force, or a time delay between rastering the laser beam and applying the tensile force.

7. The method of any one of claims 1 to 6, further comprising using the beam restrictor device to intermittently allow illumination of the capillary by the laser beam to reduce a time-averaged laser power delivered to the capillary.

8. The method of any one of claims 1 to 7, further comprising:
measuring a velocity of the first end relative to the second end; and
upon measuring that the velocity meets or exceeds a threshold value, increasing the magnitude of the tensile force to cause the break.

9. The method of any one of claims 1 to 8, wherein an outer diameter of a shaped capillary emitter tip is in a range from 5 to 12 micrometers and an outer diameter of the capillary away from the shaped capillary emitter tip is in a range from 50 to 100 micrometers.

10. The method of any one of claims 1 to 9, wherein an inner diameter of the shaped capillary emitter tip is in a range from 2 to 5 micrometers and an inner diameter of the capillary away from the shaped capillary emitter tip is in a range from 10 to 40 micrometers.

11. The method of any one of claims 1 to 10, wherein applying the tensile force causes the two formed shaped capillary emitter tips to be substantially symmetrical.

12. The method of any one of claims 1 to 11, further comprising setting a beam size of the laser beam to be about two times greater than an outer diameter of the capillary.

13. The method of any one of claims 1 to 12, further comprising varying a size of a characteristic dimension of the beam restrictor device during rastering of the laser.

14. The method of claim 13, wherein varying the size of the characteristic dimension maintains a ratio of the characteristic dimension and an outer diameter of the capillary as the diameter reduces due to heating and pulling.

15. The method of claim 14, wherein the ratio is in a range from 1.5 to 2.5.
